# FASCICULE DE BREVET EUROPEEN

(11) **EP 1 096 204 B1**
(45) Date de publication et mention de la délivrance du brevet: **08.12.2004**
(21) Numéro de dépôt: 00402943.5
(22) Date de dépôt: 24.10.2000
(51) Int. Cl.: F23G 5/46, F22G 1/04, F22G 3/00

(54) **Chaudière, notamment pour une installation d'incinération de déchets et la production d'électricité, installation et procédé d'exploitation correspondants**
Kessel, insbesondere für eine Abfallverbrennungs- und Stromerzeugungsanlage. entsprechende Anlage und Verfahren zum Betrieb
Boiler, especially for a plant for burning waste and generating electricity, corresponding installation and method of operation

(30) Priorité: 29.10.1999 FR 9913572
(43) Date de publication de la demande: 02.05.2001
(73) Titulaire: MARTIN GmbH für Umwelt- und Energietechnik, 80807 München (DE)
(72) Inventeur: Saujet, Jean-François, 92600 Asnieres (FR); Fabre, Bernard, 91460 Marcoussis (FR); Spanjaard, Brigitte, 92190 Meudon (FR)
(74) Mandataire: Zmyj, Erwin, Dipl.-Ing., Dipl.-Wirtsch.-Ing., European Patent Attorney

(56) Documents cités:
- EP-A- 0 663 561
- U.SCHATZ: "Welche Bauart für Müllverbrennungskessel" BWK BRENNSTOFF WARME KRAFT., vol. 43, no. 7/8, juillet 1991 (1991-07), pages 373-374, XP002141786 VDI VERLAG GMBH. DUSSELDORF., DE ISSN: 0006-9612

## Description

L'invention concerne une chaudière et une installation où l'incinération de déchets combustibles est réalisée dans un four comportant une chaudière exploitée pour produire de la vapeur qui est portée à haute température par un ensemble de surchauffe et qui est plus particulièrement exploitée pour entraîner, via une turbine, une machine électrique de production d'électricité.

Il existe de nombreuses installations d'incinération de déchets combustibles et en particulier de déchets ménagers qui sont agencées pour produire de l'énergie électrique en exploitant l'énergie calorifique résultant de la combustion des déchets dans un four. Cette énergie calorifique est récupérée par l'intermédiaire d'une chaudière qui est exploitée pour chauffer de l'eau de manière à produire de la vapeur. Un ensemble de surchauffe composé d'une suite de réchauffeurs permet classiquement d'obtenir une vapeur à une température de l'ordre de 360 à 400°C, sous une pression de l'ordre de 40 bars. Cette vapeur est utilisée pour actionner une turbine d'entraînement d'une machine électrique tournante de production d'électricité.

Comme il est convenu, l'élimination la plus rapide possible des déchets arrivants est le problème principal qui se pose aux exploitants de telles installations, vu les problèmes de stockage qui apparaissent inéluctablement, si la quantité incinérée est insuffisante par rapport à l'afflux de déchets à traiter où si l'installation doit être arrêtée d'une manière non programmé. Bien que l'amélioration de l'exploitation de la chaleur produite par la combustion de ces déchets pour générer de l'électricité n'ait pas le caractère critique que pose l'élimination, elle n'en présente pas moins un grand intérêt sur le plan économique pour les exploitants.

Une possibilité d'améliorer l'exploitation de la chaleur, produite dans une installation sur la base d'une quantité déterminée de déchets ayant un pouvoir calorifique déterminé, est d'agir sur le facteur intermédiaire que constitue la vapeur produite au niveau de la chaudière pour actionner la turbine d'entraînement de la machine produisant l'électricité.

Une solution possible consiste à augmenter la température de vapeur lors de sa traversée de l'ensemble de surchauffe en améliorant l'exploitation par celui-ci de la chaleur qui se dégage des déchets en combustion dans le four d'incinération. Il n'est actuellement pas possible d'augmenter la température de vapeur au-delà des températures indiquées ci-dessus, sans augmenter significativement la vitesse de détérioration d'au moins celui des surchauffeurs d'un ensemble de surchauffe qui a la température de paroi la plus élevée et où la vapeur est portée à sa température la plus élevée. Cette détérioration est notamment la conséquence de la présence de produits corrodants, tels que notamment du chlore, dans les fumées de combustion qui viennent lécher les parois externes des circuits de circulation de vapeur des surchauffeurs. Il se produit un affaiblissement progressif des parois chauffées qui se traduit finalement par l'apparition de trous entraînant des pertes d'étanchéité de plus en plus importantes au niveau du circuit de circulation de vapeur atteint. Un arrêt de l'installation pour remplacement du surchauffeur défaillant est alors nécessaire. Or, comme indiqué plus haut ; les exploitants souhaitent éviter au maximun l'arrêt d'une installation au cours de la période de temps qui sépare deux arrêts programmés, d'autant plus que la durée d'un arrêt pour un tel remplacement est nécessairement long, par exemple de l'ordre d'une semaine. Ceci a donc classiquement conduit à limiter la température maximale de vapeur en sortie d'ensemble de surchauffe à une vapeur maximale de l'ordre de 360°C, comme déjà indiqué plus haut.

L'invention propose donc une installation pour l'incinération de déchets et la production d'électricité comportant un four équipé d'une chaudière exploitée pour produire de la vapeur qui est portée par un ensemble de surchauffe constitué d'une pluralité de surchauffeurs montés en série et traversés par un circuit de circulation de fluide caloporteur reliant un ballon réservoir de fluide caloporteur à une sortie de vapeur de l'ensemble surchauffeur par l'intermédiaire de laquelle une entrée d'injection d'une turbine d'entraînement de machine tournante de production d'électricité est alimenté en vapeur.

Elle propose aussi une chaudière exploitée pour produire de la vapeur qui est portée par un ensemble de surchauffe constitué d'une pluralité de surchauffeurs montés en série et traversés par un circuit de circulation de fluide caloporteur reliant un ballon réservoir de fluide caloporteur à une sortie de vapeur de l'ensemble surchauffeur par l'intermédiaire de laquelle une entrée d'injection d'une turbine d'entraînement de machine tournante de production d'électricité est alimentée en vapeur.

Selon une caractéristique de l'invention, l'ensemble de surchauffe comporte un agencement d'alimentation en vapeur de la sortie de l'ensemble qui se scinde en deux circuits distincts à partir d'un surchauffeur, dit principal, fournissant de la vapeur à une première température et sous une première pression permettant un fonctionnement de la machine de production d'électricité avec un rendement déterminé, ce surchauffeur alimentant la sortie de l'ensemble soit par une liaison directe d'un premier des circuits, lorsque l'ensemble de surchauffe est dans une configuration dans lequel est inclus au moins un surchauffeur dit final, recevant alors la vapeur parvenant du surchauffeur principal que ce surchauffeur final porte à une température élevée permettant un fonctionnement de la machine de production d'électricité avec un rendement accru, lorsque l'ensemble de surchauffe est dans une configaration de fonctionnement dit normal, ledit ensemble comportant de plus des moyens pour assurer l'isolement du surchauffeur final, en phase de fonctionnement par défaut.

Selon une forme préférée de mise en oeuvre de l'invention, le second circuit comporte un surchauffeur, dit intermédiaire, monté en amont du surchauffeur final par rapport au surchauffeur principal duquel il reçoit la vapeur à la dite première température et sous la dite première pression, lorsque l'ensemble est en configuration de fonctionnement normal, ce surchauffeur intermédiaire assurant alors une élévation de la température de la vapeur qu'il fournit au surchauffeur final, et où des moyens sont prévus pour isoler le surchauffeur intermédiaire du surchauffeur principal et du surchauffeur final et pour le faire fonctionner en vaporisateur en liaison avec le ballon, lorsque l'ensemble est amené en configuration de fonctionnement par défaut.

L'invention propose de plus un procédé d'exploitation pour un ensemble de surchauffe d'une chaudière, notamment d'une installation d'incinération de déchets comportant un four équipé d'une chaudière, exploitée pour produire de la vapeur qui est portée à haute température par un ensemble de surchauffe constitué d'une pluralité de surchauffeurs montés en série et traversés par un circuit de circulation de fluide caloporteur reliant un ballon réservoir de fluide caloporteur à une sortie de vapeur de l'ensemble surchauffeur par l'intermédiaire de laquelle une entrée d'injection d'une turbine d'entraînement de machine tournante de production d'électricité est alimentée en vapeur. L'ensemble de surchauffe est supposé comporter un agencement d'alimentation de sa sortie de vapeur qui se scinde en deux circuits à partir d'un surchauffeur, dit principal, apte à fournir de la vapeur à une première température et sous une première pression permettant un fonctionnement de la machine de production d'électricité avec un rendement déterminé. Le surchauffeur principal est supposé alimenter la sortie de vapeur de l'ensemble soit par une liaison directe d'une premier des deux circuits, soit alternativement par l'intermédiare d'un second circuit dans lequel est inclus au moins un surchauffeur, dit final, portant à une température élevée la vapeur provenant du surchauffeur principalpour permettre une augmentation du rendement de la machine de production d'électricité.

Selon une caractéristique de l'invention, ce procédé d'exploitation prévoit deux phases alternatives de fonctionnement pour l'ensemble surchauffeur qui sont une phase de fonctionnment normal pour laquelle le surchauffeur final est en service et une phase de fonctionnement par défaut pour laquelle le surchauffeur final est mis hors circuit, la vapeur étant alors fournie par le surchauffeur principal à la sortie de vapeur de l'ensemble de surchauffe destinée à alimenter l'entrée d'injection de la turbine d'entrînement de la machine de production d'électricité.

L'invention, ses caractéristiques et ses avantages sont précisés dans la description qui suit en liaison avec les figures évoquées ci-dessous.
La figure 1 présente un schéma synoptique d'un four d'installation d'incinération de déchets.
La figure 2 présente un schéma simplifié d'un ensemble de surchauffe, selon l'invention, en configuration initiale normale.
La figure 3 présente un schéma d'un ensemble de surchauffe, selon l'invention où le circuit de circulation de fluide permet un fonctionnement, soit selon une configuration initiale normale, soit selon une configuration par défaut.

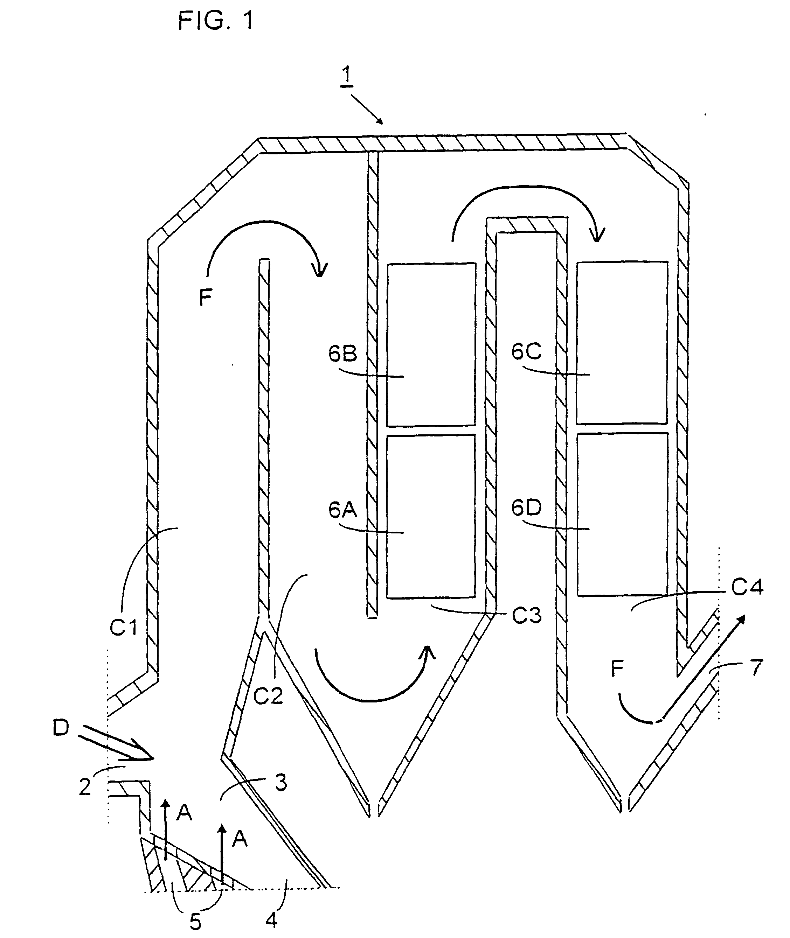

Le four d'installation d'incinération de déchets combustibles schématisé sur la figure 1 comporte une chaudière 1 qui comporte à sa base une entrée 2 par l'intermédiaire de laquelle les déchets à brûler D sont introduits dans un foyer 3 par un système connu d'alimentation à goulotte. Ce système n'est pas représenté ici dans la mesure où il n'a pas de rapport direct avec l'objet de l'invention, il en est de même pour le système d'évacuation des résidus solides de combustion qui communique avec la partie la plus basse du foyer par une ouverture 4. Une injection d'air primaire A est réalisée à des fins de combustion, à la base du foyer et sous les déchets, par des moyens symbolisés par des conduits 5. Cette injection est complétée par une injection d'air secondaire plus haut dans le foyer d'une manière connue, non illustrée ici. De l'air chaud, des fumées et des particules ou poussières résultant de la combustion s'élèvent à l'intérieur d'un premier carneau C1 d'un parcours labyrinthique vertical qui est réalisé dans la chaudière 1. Les parois de celle-ci au long d'au moins une première partie du parcours labyrinthique sont intérieurement refroidies par une circulation de liquide au travers de tubes qui ne sont pas illustrés ici. Le premier carneau C1 communique à sa partie supérieure avec un second carneau C2 qui s'étend parallèlement à lui et qui est ouvert à sa base pour permettre l'évacuation d'au moins une partie des déchets pulvérisés parvenant du premier carneau où ils se sont élevés. Le second carneau C2 communique par sa base avec un troisième carneau C3 qui s'étend parallèlement à lui et qui est ici supposé contenir au moins certains des surchauffeurs successifs qui constituent l'ensemble de suchauffe, soit par exemple ici deux surchauffeurs 6A et 6B. Comme il est connu, ces surchauffeurs comportent chacun un circuit intérieur de circulation de fluide caloporteur, classiquement composé d'éléments tubulaires creux communiquant entre eux. Les éléments tubulaires creux sont extérieurement chauffés par le mélange hétérogène qui résulte de la combustion des déchets dans l'air injecté et qui se dégage sous la forme de fumées F, où des produits volatils et des résidus plus ou moins pulvérulents sont associés à de l'air chauffé pour former un courant chaud en mouvement qui circule au long du parcours labyrinthique. Ce mouvement s'effectue de bas en haut dans les carneaux C1 et C3, dans l'exemple de chaudière présenté.

Selon une variante connue de chaudière, dite chaudière horizontale, non présentée ici, le carneau C3 peut aussi être un carneau ne contenant pas de réchauffeur. Quel que soit le cas, le fluide contenu dans le circuit intérieur de circulation d'un réchauffeur voit sa température qui s'élève au contact de la paroi portée à température élevée du tube de circuit qui le contient. Comme il est connu, des moyens extérieurs de réglage permettent d'agir sur la circulation du fluide caloporteur et donc tant sur le refroidissement des parois des tubes par ce fluide que sur l'échauffement de ce fluide par ces parois. Dans l'exemple de chaudière verticale illustré ici, le premier groupe de l'ensemble de surchauffe est éventuellement complété par un second groupe de surchauffeurs, ici référencés 6C et 6D, qui est logé dans un carneau d'extrémité C4 qui communique à sa partie supérieure avec le carneau C3 et qui s'étend parallèlement à lui. Comme il est connu, ce carneau d'extrémité contient le plus souvent un ou des éléments d'échange calorifique autre(s) que des surchauffeurs et par exemple un économiseur et/ou un vaporisateur, non représentés ici.

Dans le cas d'une chaudière horizontale, le carneau d'extrémité est positionné dans l'alignement d'un carneau supplémentaire qui prolonge horizontalement la partie supérieure de la chaudière et qui communique avec la partie supérieure du carneau C3. Les surchauffeurs de l'ensemble de surchauffe et les éventuels autres éléments d'échange calorifique prévus pour une telle chaudière horizontale sont alors successivement logés dans le conduit que forme le carneau supplémentaire et le carneau annexe qui le suit, suivant leurs besoins en matière d'échauffement.

Quel que soit le type de chaudière, les fumées F que constitue le mélange hétérogène, chaud et en mouvement, sont utilisées pour chauffer les surchauffeurs afin de permettre d'élever la température du fluide caloporteur en mouvement à l'intérieur des circuits de circulation interne comportés par ces surchauffeurs. Comme il est connu, les fumées F sont finalement évacuées hors de l'ensemble constitué par la chaudière et par le carneau annexe, en fin de parcours labyrinthique. Ceci est réalisé par l'intermédiaire d'un dispositif ici symbolisé par un conduit de sortie 7, après chauffage des surchauffeurs et des éventuels autres éléments d'échange calorifique prévus avec la chaudière considérée.

Comme il est connu les surchauffeurs de l'ensemble de surchauffe sont classiquement montés en série en aval d'un ballon de stockage de fluide, qui leur fournit de la vapeur saturée et ils sont traversés par un circuit de circulation de fluide caloporteur qui relie la ballon réservoir de fluide caloporteur à une sortie de vapeur S de l'ensemble de surchauffe. Le ballon est relié à un économiseur, par l'intermédiaire duquel l'eau destinée à être transformée en vapeur est chauffée, et à un évaporateur par l'intermédiaire duquel il est produit de la vapeur saturée. Cet économiseur et ce vaporisateur sont usuellement placés dans le cerneau le plus éloigné du foyer et donc le moins chaud, dont la position correspond par exemple à celle du cerneau C4 sur la figure 1. Des séparateurs permettent d'isoler la vapeur saturée au niveau du ballon pour l'envoyer au premier des surchauffeurs de l'ensemble de surchauffe.

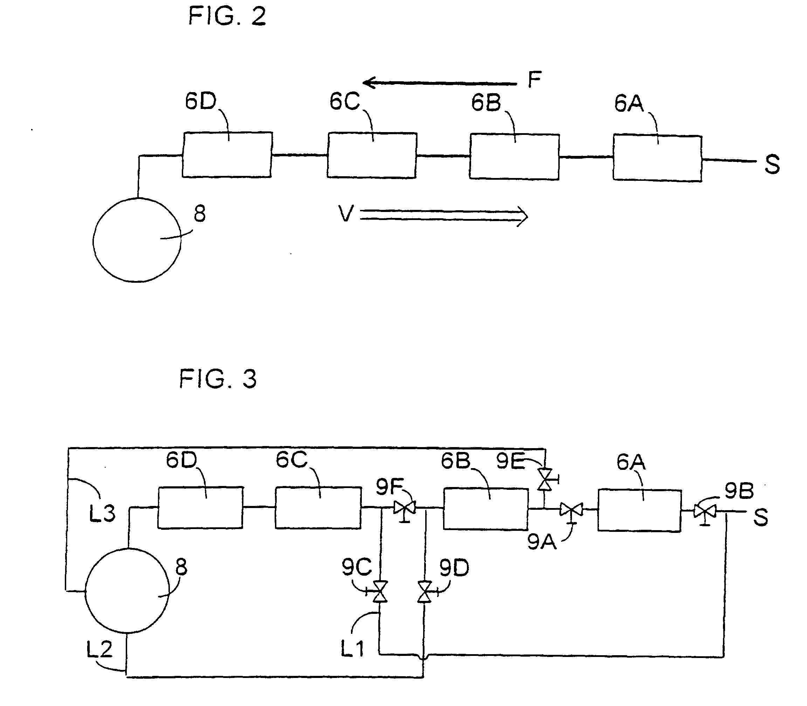

Dans l'illustration présentée sur la figure 2, la surchauffe de la vapeur est supposé s'effectuer progressivement depuis un surchauffeur à basse température 6D alimenté en vapeur saturé par l'intermédiaire d'un ballon 8. Ce surchauffeur 6D est classiquement suivi d'un surchauffeur à moyenne température 6C, ici dit surchauffeur principal, qui est alimenté en vapeur par l'intermédiaire du précédent. Ce surchauffeur principal 6C travaille dans des conditions habituelles pour ce type de surchauffeur et il est apte à amener la vapeur reçue en entrée jusqu'à une température de sortie et sous une pression qui correspondent aux valeurs habituellement choisies pour alimenter l'entrée d'injection d'une turbine d'entraînment de machine de production d'électricité dans des conditions qui permettent à cette machine de fonctionner avec un rendement déterminé usuel.

La température de la vapeur en sortie du surchauffeur principal peut éventuellement atteindre une valeur de l'ordre de 400°C. Toutefois en conditions d'exploitation normale, la température de vapeur en sortie de ce surchauffeur principal est préférablement choisie moindre et par exemple de l'ordre de 360 à 380°C.

L'agencement d'alimentation en vapeur de la sortie S de l'ensemble de surchauffe se scinde en deux circuits distincts destinés à être alternativement exploités en sortie du surchauffeur principal 6C. Un premier de ces circuits relie la sortie du surchauffeur 6C par une liaison directe L1 à la sortie S.

Selon le second de ces circuits, le surchauffeur principal 6C est suivi d'un surchauffeur 6B, dit intermédiaire, fonctionnant à haute température qui, en fonctionnement normal, est chargé d'élever la température de la vapeur qu'il reçoit du précédent jusqu'à une valeur de l'ordre de 400°C, afin d'alimenter un surchauffeur final 6A. En fonctionnement normal, le surchauffeur final, ici dit martyr, est chargé d'élever la vapeur à une valeur maximale de sortie à laquelle est alimentée une turbine de machine tournante productrice d'électricité dont l'entrée d'injection est reliée à la sortie S de l'ensemble de surchauffe.

Dans la mesure où la température des fumées F tend à décroître au long du parcours labyrinthique définie par la suite des carneaux entre le foyer 3 et le conduit de sortie 7, il est prévu que les surchauffeurs soient disposés en série de manière que le surchauffeur final 6A qui fournit la vapeur la plus chaude soit plus proche du foyer que les autres et que le surchauffeur basse température 6D en soit le plus éloigné, comme ordinairement prévu.

La température maximale de vapeur apparaissant en sortie du surchauffeur final 6A est susceptible d'être choisie dans une gamme se limitant, d'une part inférieurement, à une valeur qui correspond pratiquement à la température de vapeur à l'entrée de ce surchauffeur final 6A et donc à la sortie du surchauffeur intermédiaire 6B, ainsi que, d'autre part et supérieurement à une valeur préférablement limitée à par exemple 510°C. Ceci a pour effet de conduire à un risque de corrosion accélerée qui est acceptable pour l'installation, dans la mesure où des mesures particulières sont prévues pour en tenir compte. Ces mesures permettent d'éviter à l'exploitant d'avoir à arrêter l'installation, lorsque le surchauffeur final n'est plus en état de fonctionner convenablement en raison de sa corrosion. En effet, comme indiqué plus haut, la défaillance d'un surchaffeur se traduit par une perte d'étanchéité au niveau du circuit de circulation de vapeur qui ne peut manquer d'être détectée par l'exploitant, en raison de ses effets. Selon l'invention et comme schématisé sur la figure 3, il est prévu que le surchauffeur final 6A, soit relié par des vannes d'isolement 9A et 9B, d'une part, au surchauffeur intermédiaire 6B qui l'alimente en vapeur et d'autre part à la sortie S de l'ensemble de surchauffe. Ces vannes sont prévues manoeuvrables depuis l'extérieur de la chaudière, hors de laquelle elles sont ici supposées placées. Elles permettent d'isoler le surchauffeur final du circuit d'alimentation en vapeur de la turbine, dont il fait partie en fonctionnement normal, sans avoir à arrêter l'installation, s'il s'avère que ce surchauffeur final corrodé présente un défaut d'étanchéité le rendant inutilisable et qu'il est donc nécessaire de passer à une phase de fonctionnement, dite par défaut.

Selon un procédé de substitution, selon l'invention, il est prévu de faire fonctionner l'installation sans surchauffeur final et dans des conditions de production de vapeur correspondant à celles d'une installation selon l'art connu. A cette fin, il est prévu dexploiter la liaison directe L1 classiquement constituée par une canalisation permettant de relier la sortie du surchauffeur principal 6C à la sortie de vapeur S de l'ensemble de surchauffe, par l'intermédiaire d'une vanne de branchement 9C, pour alimenter en vapeur la turbine d'entraînement de la machine tournante de production d'électricité, lorsque la vanne 9B isole le surchauffeur final 6A. Le surchauffeur principal 6C chauffe la vapeur qu'il reçoit du surchauffeur basse température de manière à la porter à une température habituelle pour un surchauffeur d'alimentation de turbine en vapeur dans le domaine des installations d'incinération d'ordure. Cette température atteint classiquement 360°C, alors que le surchauffeur est soumis à une température d'environ 600°C par les fumées F en mouvement dans le carneau C3 qui le contient. Selon l'invention, il est prévu de faire fonctionner le surchauffeur intermédiaire 6B en tant que vaporisateur, en phase de fonctionnement par défaut, pour éviter qu'il ne subisse la même accélération de sa corrosion, due à l'excès de chaleur, que le surchauffeur final à la suite duquel il est positionné dans le sens du déplacement des fumées dans la chaudière.

A cet effet, le surchauffeur intermédiaire 6B est reliée au ballon 8, par une canalisation L2 et via une vanne de brachement 9D, de manière à en recevoir un mélange liquide vapeur se présentant sous la forme d'une émulsion dont il assure la vaporisation, cette émulsion assurant par ailleurs le refroidissement du métal des tubes constituant ce réchauffeur. Du fait de l'inaction du surchauffeur final 6A, il n'y a plus aucun refroidissement des fumées en mouvement au niveau de ce surchauffeur final, et la quantité de chaleur qu'il absorbait se reporte sur le surchauffeur intermédiare 6B qui le suit sur le trajet suivi par les fumées. Ceci conduit à un surcroît d'échange thermique au niveau de ce surchauffeur 6B, alors connecté et alimenté pour fonctionner en vaporisateur, ce surcroît est par exemple de l'ordre de 1,6 à 1,7. La vapeur ainsi obtenue est alors envoyée au surchauffeur basse température 6D, à température convenable, au travers du ballon 8 auquel le surchauffeur intermédaire 6B est relié par une canalisation L3 et via une vanne de branchement 9^{E}. Une vanne supplémentaire 9F est alors insérée entre les surchauffeurs 6B et 6C pour permettre de les interconnecter en période de fonctionnement normal de l'ensemble de surchauffe et de les déconnecter l'un de l'autre en période de fonctionnement par défaut, lorsque le surchauffeur final 6A n'est plus en service.

Les conditions de fonctionnement du surchauffeur intermédiaire 6B en vaporisateur sont nettement moins sévères que celles du surchauffeur final et il n'y a donc pas d'accélération de la corrosion due à un échauffement excessif, ceci permet donc à une installation d'incinération de continuer à fonctionner, lorsque son surchauffeur final n'est plus à même de fonctionner avant la fin du délai normal de révision au bout duquel l'installation doit nécessairement être arrêtée.

Selon une variante d'exploitation, il est prévu d'utiliser la liaison L1 reliant le surchauffeur principal à la sortie (S) de l'ensemble de surchauffe en aval du surchauffeur final, pour régler la température de vapeur à la sortie S de l'ensemble de surchauffe en injectant de la vapeur provenant du surchauffeur principal à cette entrée, via la vanne 9C, en même temps que la vapeur qui provient du surchauffeur final, lorsque ce dernier est en fonctionnement.

Bien entendu, il est aussi possible d'augmenter la pression de vapeur destinée à être injectée dans la turbine d'entraînement, en plus de l'augmentation de température plus particulièrement décrite ci-dessus, pour obtenir un accroissement encore plus significatif de la production d'électricité dans un installation d'incinération selon l'invention.

## Revendications

1. Installation pour l'incinération de déchets et la production d'électricité comportant un four équipé d'une chaudière (1) exploitée pour produire de la vapeur qui est portée à haute température par un ensemble de surchauffe constitué d'une pluralité de surchauffeurs montés en série et traversés par un circuit de circulation de fluide caloporteur reliant un ballon réservoir de fluide caloporteur (8) à une sortie de vapeur (S) de l'ensemble surchauffeur par l'intermédiaire de laquelle une entrée d'injection d'une turbine d'entraînement de machine tournante de production d'électricité est alimentée en vapeur, **caractérisée en ce que** l'ensemble de surchauffe comporte un agencement d'alimentation en vapeur de sa sortie (S) qui se scinde en deux circuits distincts à partir d'un surchauffeur (6C), dit principal, fournissant de la vapeur à une première température et sous une première pression permettant un fonctionnement de la machine de production d'électricité avec un rendement déterminé, ce surchauffeur alimentant la sortie de l'ensemble de surchauffe soit par une liaison directe (L1) d'un premier des circuits, lorsque l'ensemble de surchauffe est dans une configuration de fonctionnement dit par défaut, soit par l'intermédiaire du second circuit dans lequel est inclus au moins un surchauffeur (6A), dit final, recevant alors la vapeur parvenant du surchauffeur principal que ce surchauffeur final porte à une température élevée permettant un fonctionnement de la machine de production d'électricité avec un rendement accru, lorsque l'ensemble de surchauffe est dans une configuration de fonctionnement dit normal, ledit ensemble comportant de plus des moyens (9A, 9B) pour assurer l'isolement du surchauffeur final, en phase de fonctionnement par défaut.

2. Chaudière, notamment pour installation d'incinération de déchets et la production d'électricité, exploitée pour produire de la vapeur qui est portée à haute température par un ensemble de surchauffe constitué d'une pluralité de surchauffeurs montés en série et traversés par un circuit de ciculation de fluide caloporteur reliant un ballon réservoir de fluide caloporteur (8) à une sortie de vapeur (S) de l'ensemble surchauffeur par l'intermédiaire de laquelle une entrée d'injection d'une turbine d'entraînement de machine tournante de production d'électricité est alimentée en vapeur, **caractérisée en ce que** l'ensemble de surchauffe comporte un agencement d'alimentation en vapeur de sa sortie (S) qui se scinde en deux circuits distincts à partir d'un surchauffeur (6C), dit principal, fournissant de la vapeur à une première température et sous une première pression permettant un fonctionnement de la machine de production d'électricité avec un rendement déterminé, ce surchauffeur alimentant la sortie de l'ensemble de surchauffe soit par une liaison directe (L1) d'un premier des circuits, lorsque l'ensemble de surchauffe est dans une configuration de fonctionnement dit par défaut, soit par l'intermédiaire du second circuit dans lequel est inclus au moins un surchauffeur (6A), dit final, recevant alors la vapeur parvenant du surchauffeur principal que ce surchauffeur final porte à une température élevée permettant un fonctionnement de la machine de production d'électricité avec un rendement accru, lorsque l'ensemble de surchauffe est dans une configuration de fonctionnement dit normal, ledit ensemble comportant de plus des moyens (9A, 9B) pour assurer l'isolement dur surchauffeur final, en phase de fonctionnement par défaut.

3. Chaudière, selon la revendication 2, où le second circuit comporte un surchauffeur (6B), dit intermédiaire, monté en amont du surchaffeur final par rapport au surchauffeur principal duquel il reçoit la vapeur à la dite première température et sous la dite première pression, lorsque l'ensemble est en configuration de fonctionnement normal, ce surchauffeur intermédiaire assurant alors une élévation de la température de la vapeur qu'il fournit au surchauffeur final, et où des moyens (9F, 9A, 9D, 9E, L2, L3) sont prévus pour isoler le surchauffeur intermédiaire du surchauffeur principal et du surchauffeur final et pour le faire fonctionner en vaporisateur en liaison avec le ballon, lorsque l'ensemble est amené en configuration de fonctionnement par défaut.

4. Chaudière, selon l'une des revendications 2 et 3, où la liaison (L1), reliant le surchauffeur principale à la sortie (S) de l'ensemble de surchauffe en aval du surchauffeur final, qui est équipée d'une vanne (9C), est exploitée pour régler la température de vapeur à la sortie de l'ensemble de surchauffe en injectant de la vapeur provenant du surchauffeur principal à cette sortie, en même temps que la vapeur qui provient du surchauffeur final, lorsque ce dernier est en fonctionnement.

5. Procédé d'exploitation d'un ensemble de surchauffe d'une chaudière, notamment d'une installation d'incinération de déchets comportant un four équipé d'une chaudière (1), exploitée pour produire de la vapeur qui est portée à haute température, par un ensemble de surchauffe constitué d'une pluralité de surchauffeurs montés en série et traversés par un circuit de circulation de fluide caloporteur reliant un ballon réservoir de fluide caloporteur (8) à une sortie de vapeur (S) de l'ensemble surchauffeur par l'intermédiaire de laquelle une entrée d'injection d'une turbine d'entraînement de machine tournante de production d'électricité est alimentée en vapeur, ledit ensemble de surchauffe comportant un agencement d'alimentation de sa sortie de vapeur qui se scinde en deux circuits à partir d'un surchauffeur (6C), dit principal, apte à fournir de la vapeur à une première température et sous une première pression permettant un fonctionnement de la machine de production d'électricité avec un rendement déterminé, ce surchauffeur principal alimentant la sortie de vapeur de l'ensemble soit par une liaison directe (L1) d'un premier des deux circuits, soit alternativement par l'intermédiaire d'un second circuit dans lequel est inclus au moins un surchauffeur (6A), dit final, portant à une température élevée la vapeur provenant du surchauffeur principal pour permettre une augmentation du rendement de la machine de production d'électricité, ledit procédé d'exploitation étant **caractérisé en ce qu'**il prévoit deux phases alternatives de fonctionnement pour l'ensemble surchauffeur qui sont une phase de fonctionnement normal pour laquelle le surchauffeur final est en service et une phase de fonctionnement par défaut laquelle le surchauffeur final est mis hors circuit, la vapeur étant alors directement fournie par le surchauffeur princiapl à la sortie de vapeur de l'ensemble de surchauffe destinée à alimenter l'entrée d'injection de la turbine d'entraînement de la machine de production d'électricité.

## Patentansprüche

1. Anlage zum Verbrennen von Abfällen und zur Stromerzeugung, umfassend einen Ofen, der mit einem Dampfkessel (1) versehen ist, der genutzt wird, um Dampf zu erzeugen, der von einer Überhitzungseinheit, die von einer Vielzahl von Überhitzern gebildet ist, die in Serie geschaltet sind und von einer Kühlfluidzirkulationsschaltung durchquert werden, die einen Kühlfluidbehälter (8) mit einem Dampfausgang (S) der Überhitzungseinheit verbindet, von dem ein Einspritzeingang einer Antriebsturbine eine r Stromerzeugungsmaschine mit Dampf gespeist wird, auf eine hohe Temperatur gebracht wird, dadurch ge kennzeichnet, dass die Überhitzungseinheit eine Anordnung zur Dampfversorgung ihres Ausgangs (S) umfasst, die sich in zwei getrennte Schaltungen ausgehe nd von einem Überhitzer (6C), Hauptüberhitzer genannt, teilt, der Dampf mit einer ersten Temperatur und unter einem ersten Druck liefert, der einen Betrieb der Stromerzeugungsmaschine mit einer bestimmten Leistung er möglicht, wobei dieser Überhitzer den Ausgang der Überhitzungseinheit entweder über eine direkte Verbindung (L1) einer ersten der Schaltungen speist, wenn die Überhitzungseinheit in einer so genannten herabgesetzten Betriebsausführung ist, oder über die zweite Schaltung speist, in die mindeste ns ein so genannter Endüberhitzer (6A) eingeschlossen ist, der nun den Dampf, der vom Hauptüberhitzer kommt, empfängt, den dieser Endüberhitzer auf eine hohe Temperatur bringt, die einen Betrieb der Stromerzeugungsmaschine mit einer gesteigerten Leistung ermöglicht, wobei, wenn die Überhitzungseinheit in einer so genannten normalen Betriebsausführung ist, die Einheit zusätzlich Mittel (9A, 9B) umfasst, um die Isolierung des Endüberhitzers in der herabgesetzten Betriebsphase sicher zu stellen.

2. Dampfkessel, insbesondere für eine Anlage zur Abfallverbrennung und Stromerzeugung, der genutzt wird, um Dampf zu erzeugen, der von einer Überhitzungseinheit, die von einer Vielzahl von Überhitzern gebildet ist, die in Serie geschaltet sind und von einer Kühlfluidzirkulationsschaltung durchquert werden, die einen Kühlfluidbehälter (8) mit einem Dampfausgang (S) der Überhitzungseinheit verbindet, von der ein Einspritzeingang einer Antriebsturbine einer Stromerzeugungsmaschine mit Dampf gespeist wird, auf eine hohe T emperatur gebracht wird, dadurch ge kennzeichnet, dass die Überhitzungseinheit eine Anordnung zur Dampfversorgung des Ausgangs (S) der Einheit umfasst, die sich in zwei getrennte Schaltungen ausgehend von einem Überhitzer (6C), Hauptüberhitzer genannt, teilt, der Dampf mit einer ersten Temperatur und unter einem ersten Druck liefert, der einen Betrieb der Stromerzeugungsmaschine mit einer bestimmten Leistung ermöglicht, wobei dieser Überhitzer den Ausgang der Überhitzungseinheit entweder über eine direkte Verbindung (L1) einer ersten der Schaltungen speist, wenn die Überhitzungseinheit in einer so genannten herabgesetzten Betriebsausführung vorhanden ist, oder über die zweite Schaltung speist, in die mindestens ein so genannter Endüberhitzer (6A) eingeschlossen ist, der nun den Dampf, der vom Hauptüberhitzer kommt, empfängt, den dieser Endüberhitzer auf eine hohe Temperatur bringt, die einen Betrieb der Stromerzeugungsmaschine mit einer gesteigerten Leistung ermöglicht, wobei, wenn die Überhitzungseinheit in einer so genannten normalen Betriebsausführung vorhanden ist, die Einheit zusätzlich Mittel (9A, 9B) umfasst, um die Isolierung des Endüberhitzers in der herabgesetzten Betriebsphase sicher zu stellen.

3. Dampfkessel nach Anspruch 2, bei dem die zweite Schaltung einen so genannten Zwischenüberhitzer (6B) umfasst, der stromaufwärts zu dem Endüberhitzer in Bezug auf den Hauptüberhitzer, von dem er den Dampf mit der so genannten ersten Temperatur empfängt und unter dem so genannten ersten Druck erhält, wenn sich die Einheit in der normalen Betriebsausführung befindet, angeordnet ist, wobei dieser Zwischenüberhitzer nun eine Erhöhung der Temperatur des Dampfes, den er an den Endüberhitzer liefert, sicher stellt, und wobei Mittel (9F, 9A, 9D, 9E, L2, L3) vorge sehen sind, um den Zwischenüberhitzer von dem Hauptüberhitzer und dem Endüberhitzer zu isolieren und ihn als Verdampfer in Verbindung mit dem Behälter zu betreiben, wenn die Einheit in einer herabgesetzten Betriebsausführung funktioniert.

4. Dampfkessel nach einem der Ansprüche 2 und 3, bei dem die Verbindung (L1), die den Hauptüberhitzer mit dem Ausgang (S) der Überhitzungseinheit stromabwärts zum Endüberhitzer, der mit einem Ventil (9C) versehen ist, verbindet, genutzt wird, um die Dampftemperatur am Ausgang der Überhitzungseinheit zu regeln, indem Dampf, der von dem Hauptüberhitzer kommt, an diesem Ausgang gleichzeitig mit dem Dampf, der von dem Endüberhitzer kommt, wenn dieser letztgenannte in Betrieb ist, eingespritzt wird.

5. Betriebsverfahren für eine Überhitzungseinheit eines Dampfkessels, insbesondere eine Abfallverbrennungsanlage, umfassend einen mit einem Dampfkessel (1) ausgestatteten Ofen, der genutzt wird, um Dampf zu erzeugen, der auf eine hohe Temperatur durch eine Überhitzungseinheit gebracht wird, die von einer Vielzahl von Überhitzern gebildet ist, die in Serie geschaltet sind und von einer Kühlfluidzirkulationsschaltung durchquert werden, die einen Kühlfluidbehälter (8) mit einem Dampfausgang (S) der Überhitzungseinheit verbindet, über den ein Einspritzeingang einer Antriebsturbine einer Stromerzeugungsmaschine mit Dampf gespeist wird, wobei die Überhitzungseinheit eine Anordnung zur Versorgung des Ausgangs mit Dampf umfasst, die sich in zwei Schaltungen von einem Überhitzer (6C), Hauptüberhitzer genannt, ausgehend teilt, der Dampf mit einer ersten Temperatur und unter einem ersten Druck liefern kann, der einen Betrieb der Stromerzeugungsmaschine mit einer bestimmten Leistung ermöglicht, wobei der Hauptüberhitzer den Dampfausgang der Ein heit ent weder durch eine direkte Verbindung (L1) einer ersten der beiden Leitungen versorgt, oder mit Hilfe einer zweiten Schaltung, in der mindestens ein Überhitzer (6A), Endüberhitzer genannt, vorgesehen ist, der den Dampf, der vom Hauptüberhitzer kommt, auf eine hohe Temperatur bringt, um eine Erhöhung der Leistung der Stromerzeugungsmaschine zu ermöglichen, wobei dieses Betriebsverfahren **dadurch gekennzeichnet ist, dass** es zwei alternative Betriebsphasen für die Überhitzungseinheit vorsieht, die ein e Normalbetriebsphase, in der der Endüberhitzer in Betrieb ist, und eine herabgesetzte Betriebsphase sind, in der der Endüberhitzer ausgeschaltet ist, wobei der Dampf nun direkt von dem Hauptüberhitzer an den Dampfausgang der Überhitzungseinheit geliefer t wird, der dazu bestimmt ist, den Einspritzeingang der Antriebsturbine der Stromerzeugungsmaschine zu versorgen.

## Claims

1. Installation for incinerating waste and for generating electricity, said installation including a furnace equipped with a boiler (1) used to generate steam which is brought to a high temperature by a superheater unit made up of a plurality of superheaters connected in series and through which a heat-transfer fluid circuit passes that connects a heat-transfer fluid tank (8) to a steam outlet (S) of the superheater unit, via which steam is fed into an injection inlet of a turbine of a rotating machine for generating electricity, **characterized in that** the superheater unit includes a steam feed circuit for feeding steam to its outlet (S), which circuit splits into two seperate circuits starting from a "main" superheater (6C) delivering steam at a first temperature and at a first pressure enabling the electricity-generating machine to operate with a defined efficiency, this superheater feeding the outlet of the superheater unit either via a direct link (1) of a first one of the circuits, when the superheater unit is in a "fault" operating configuration, or else via the second circuit which includes at least one "final" superheater (6A), then receiving the steam from the main superheater, and heating said steam to a high temperature enabling the electricity-generating machine to operate with an increased efficiency, when the superheater unit is in a "normal" operating configuration, said unit further including means (9A, 9B) for isolating the final superheater, during fault operation.

2. Boiler, in particular for an installation for incinerating waste and for generating electricity, which boiler is used to generate steam which is brought to a high temperature by a superheater unit made up of a plurality of superheaters connected in series and through which a heat transfer fluid circuit passes that connects a heat transfer fluid tank (8) to a steam outlet (S) of the superheater unit, via which steam is fed into an injection inlet of a turbine of a rotating machine for generating electricity, **characterized in that** the superheater unit includes a steam feed circuit for feeding steam to its outlet (S) which circuit splits into two distinct circuits starting from a "main" superheater (6C) delivering steam at a first temperature and at a first pressure enabling the electricity-generating machine to operate with a defined efficiency, this superheater feeding the outlet of the superheater unit either via a direct link (1) of a first one of the circuits, when the superheater unit is in a "fault" operating configuration, or else via the second circuit which includes at least one "final" superheater (6A) then receiving the steam from the main superheater, and heating said steam to a high temperature enabling the electricity-generating machine to operate with increased efficiency, when the superheater unit is in a "normal" operating configuration, said unit further including means (9A, 9B) for isolating the final superheater, during fault operation.

3. Boiler according to Claim 2, in which the second circuit includes an "intermediate" superheater (6B) mounted upstream of the final superheater relative to the main superheater from which it receives steam at said first temperature and at said first pressure, when the unit is in the normal operating configuration, this intermediate superheater then raising the temperature of the steam that it delivers to the final superheater and in which means (9F, 9A, 9D, 9E, L2, L3) are provided to isolate the intermediate superheater from the main superheater, and from the final superheater, and to cause it to operate as an evaporator in association with the tank, when the unit is brought to its fault operating configuration.

4. Boiler according to either of Claims 2 and 3, in which the link that connects the main superheater to the outlet (S) of the superheater unit downstream of the final superheater and that is equipped with a valve (9C) is used to adjust the steam temperature at the outlet of the superheater unit by injecting steam coming from the main superheater into said outlet at the same time as the steam coming from the final superheater, when said final superheater is in operation.

5. Method of operating a superheater unit of a boiler, in particular for a waste incineration installation including a furnace equipped with a boiler (1) which is used to generate steam which is brought to a high temperature by a superheater unit made up of a plurality of superheaters connected in series and through which a heat-transfer fluid circuit passes that connects a heat-transfer fluid tank (8) to a steam outlet (S) of the superheater unit, via which steam is fed into an injection inlet of a turbine of a rotating machine for generating electricity, said superheater unit including a feed circuit for feeding steam to its outlet, which circuit splits into two circuits starting from a "main" superheater (6C) suitable for delivering steam at a first temperature and at a first pressure enabling the electricity-generating machine to operate with a defined efficiency, said main superheater feeding the steam outlet of the steam unit either via a direct link (1) of a first one of the two circuits, or else, alternatively, via a second circuit which includes at least one "final" superheater (6A) heating the steam coming from the main superheater to a high temperature making it possible to increase the efficiency of the electricity-generating machine, said method being **characterized in that** it provides two alternative operating modes for the superheater unit, namely a normal operating mode in which the final superheater is in service, and a fault operating mode in which the final superheater is taken out of the circuit, the steam then being delivered by the main superheater directly to the steam outlet of the superheater unit, which outlet serves to feed the injection inlet of the turbine for driving the electricity-generating machine.
